# EUROPEAN PATENT APPLICATION

(11) **EP 4 679 304 A1**
(43) Date of publication of application: **14.01.2026**
(21) Application number: 24188277.8
(22) Date of filing: 12.07.2024
(51) Int. Cl.: G06F 21/57, G06F 21/56, H04L 9/40, H04L 67/12, H04W 4/44

(54) **SYSTEM AND METHOD FOR PROTECTING A SYSTEM**

(71) Applicant: Argus Cyber Security Ltd, 6789155 Tel Aviv (IL)
(72) Inventor: Bari-Ephraim, Yael, 6789155 Tel Aviv (IL); Lavi, Oron, 6789155 Tel Aviv (IL)
(74) Representative: Aumovio Corporation

(57) **Abstract**

A system and method for detecting malware includes initiating a mock transaction by sending a mock message to at least one of: an entity internal to a system and an entity external to the system; obtaining a response message related to the mock message; and determining that a malware is modifying messages exchanged between system entities based on at least one of: attributes of the response message and content of the response message.

## Description

### FIELD OF THE INVENTION

The present invention relates generally to protecting systems from external attacks. More specifically, the present invention relates to protecting vehicles and automotive systems from external attacks.

### BACKGROUND OF THE INVENTION

Modern automotive systems are complex environments consisting of multiple components, subsystems and multiple types of communication channels that allow the subsystems and components to communicate with each other, as well as communicate and/or interface with systems, applications, or other entities, e.g., over the Internet.

Typically, each subsystem in a vehicle is made of, or includes, different hardware and software components, and can use multiple types of communication channels and protocols to send and/or receive information, e.g., send requests to an entity on the internet, or receive responses therefrom, sensor data, commands, reports or control other subsystems or components.

The ability of components in a vehicle to communicate with external entities, that is, communicate with entities which are external to the vehicle expose these components to risks and attacks. For example, a malware can manipulate messages sent by a software in a vehicle, e.g., modify content, addresses and the like, the malware can further modify messages destined to a specific component in the vehicle. There currently exists no system or method that can automatically, dynamically, and proactively shield and protect components in a vehicle from malware attacks which involve external entities. Therefore, there may be a demand for a solution to the aforementioned vulnerabilities, risks and drawbacks.

### SUMMARY OF THE INVENTION

An embodiment of the invention includes a method of detecting malware in a vehicle and/or an Internet-of-Things (IoT) device. The method includes initiating a mock transaction by sending a mock message to at least one of: an entity internal to a system and an entity external to the system; obtaining a response message related to the mock message; and determining that a malware is modifying messages exchanged between system entities based on at least one of: attributes of the response message and content of the response message.

Determining the response message was intercepted can be based on comparing a message received in the mock transaction and a message destined to the internal entity. Determining the response message was intercepted can be based on predefined indicators. Determining the response message was intercepted can be based on comparing the message to an expected message. The response message can be received from an internal entity in the system. An embodiment can include obtaining, from a forwarding component which is external to the vehicle, a response message received by the forwarding component from the external entity, wherein determining the response message was intercepted is based on comparing the obtained message with the message received from the forwarding component.

Initiating the mock transaction can include receiving, from the internal entity, at least one parameter to be used in a communication with the external entity; using the at least one parameter for generating a message; and sending the message to the external entity. An embodiment can include receiving, from the internal entity, at least one parameter to be used in a communication with the external entity; and determining a malware is intercepting communication between the external and internal entities based on the at least one parameter.

An embodiment can include receiving, from the internal entity, at least one parameter to be used in a communication with the external entity; and using the at least one parameter to determine a message sent to the external entity is suspicious. An embodiment can include initiating the mock transaction upon receiving request/indication from the internal entity or protected system. If the message exchanged between the external entity and the internal entity or protected system is not preceded by a specific data transaction, then an embodiment determines a malware is intercepting communication between the external and the protected system or internal entities.

In an embodiment, determining whether a message was intercepted is based on a configuration which is dynamically updated. An embodiment can include obtaining a message sent from the internal entity to the external entity; and determining the message is suspicious based on at least one of: a destination address, a list of allowed destination addresses, a pattern in the message, templates of malware's code injections, and a difference between the message and an expected structure or content.

Determining a message was intercepted can be performed by an agent included in the internal entity. Determining a message was intercepted can be based on at least one of: usage of the internal entity, type of the internal entity, software included in the internal entity, hardware included in the internal entity, state of the internal entity, and a condition of the internal entity.

In some embodiments, the method is performed periodically. In some embodiments, the method is performed based on at least one of: a state of the vehicle, a context of the vehicle, and an event. In an embodiment, the method is performed prior to enabling an internal entity to communicate with the external entity. In an embodiment, determining the message was intercepted is based on a flow or sequence of messages.

A solution to the aforementioned drawbacks is achieved by the subject matter of the appended independent claims. The dependent claims disclose optional embodiments thereof. Other aspects and/or advantages of the present invention are described herein.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. The dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device according to illustrative embodiments of the present invention;
Fig. 2 shows a system according to illustrative embodiments of the present invention;
Fig. 3 shows a system according to illustrative embodiments of the present invention;
Fig. 4A shows a flow according to illustrative embodiments of the present invention;
Fig. 4B shows a flow according to illustrative embodiments of the present invention;
Fig. 4C shows a flow according to illustrative embodiments of the present invention; and
Fig. 5 shows a flowchart of a method according to illustrative embodiments of the present invention.

### DETAILED DESCRIPTION

Embodiments of the invention provide and enable new ways to automatically detect, reveal and/or identify an attack. More specifically, embodiments detect, determine, and identify that an attacker or hostile entity is intervening in a communication between an entity internal to a system and an entity which is external thereto. Although cars and vehicles are mainly referred to herein, it will be understood that ships, planes and the like are relevant as well as any system which includes components that can communicate with entities which are external to the system.

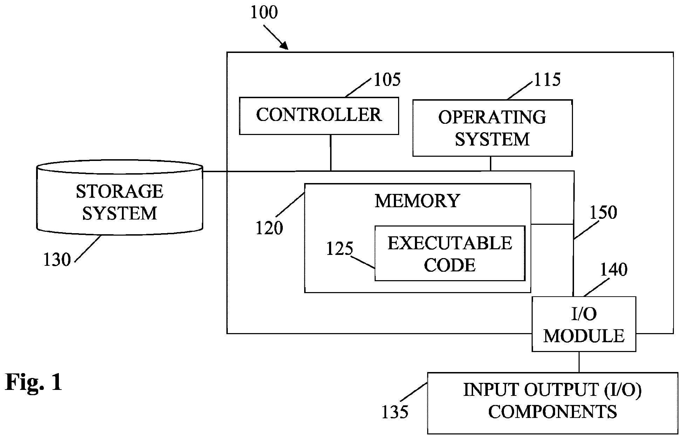

Reference is made to Fig. 1, showing a non-limiting, block diagram of a computing device or system 100 that may be used by, or included in, a system according to some embodiments of the present invention. For example, computing device 100 may be an ECU installed in a vehicle, e.g., an ECU 250, or a sensor 251 as further described herein. For the sake of clarity and simplicity, the term ECU will be used herein, however, it will be understood that any relevant components or elements may be applicable, e.g., IoT devices, smart sensors and the like.

In some embodiments, computing device (or system) 100 includes a controller 105 that is a hardware controller. For example, computer hardware processor or hardware controller 105 can be, or can include, a central processing unit processor (CPU), a chip or any suitable computing or computational device. In some embodiments, computing system 100 includes a memory 120, an operating system (OS) 115, executable code 125, a storage system 130, communication infrastructure 150, input/output (I/O) module 140 and I/O components 135 which may be detachably connected to computing device 100. In some embodiments, controller 105 (or one or more controllers or processors, possibly across multiple units or devices) is configured (e.g., by executing software or code) to carry out methods described herein, and/or to execute or act as the various modules, units, etc., for example by executing software or by using dedicated circuitry. More than one computing device 100 may be included in, and one or more computing devices 100 may be, or act as the components of, a system according to some embodiments of the invention.

In some embodiments, OS 115 includes any code segment (e.g., one similar to executable code 125 described herein) designed and/or configured to perform tasks involving coordination, scheduling, arbitration, supervising, controlling or otherwise managing operation of computing device 100, for example, scheduling execution of software programs or enabling software programs or other modules or units to communicate. For example, OS 115 can be a commercial operating system, e.g., QNX or Linux.

In some embodiments, memory 120 is a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different, memory units. In some embodiments, memory 120 is a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 can be software, an application, a program, a process, task or script. A program, process, task, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein. In some embodiments, executable code 125 is executed by controller 105 possibly under control of operating system 115.

For example, executable code 125 may be an application that automatically, possibly dynamically and proactively, determines a message exchanged between an internal and external entities was intercepted and modified as further described herein. Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein.

Executable code 125 may be, or may include several applications, services, routines or other software modules or components. It will be understood that components of a system (e.g., components of system 260) as described herein may be software components such as applications, services, routines or other software components.

Storage system 130 can be, or may include, any storage unit, architecture or hardware. For example, storage system can be, or can include, a universal serial bus (USB) device, a RAM unit, or a flash memory connected to, or included in an ECU 250 as further described herein. In some cases, storage system 130 can include a hard disk drive. In some embodiments, some of the components shown in Fig. 1 may be omitted. For example, in an ECU 250, storage system 130 may be a non-volatile memory (e.g., a flash memory) included in memory 120 of an ECU, in yet other cases, storage system 130 may be a portion of a RAM, e.g., a portion of memory 120 as described. Accordingly, although shown as a separate component, storage system 130 may be embedded or included in system 100, e.g., in memory 120 of an ECU 250, sensor 251 or Appshield 282 as further described herein.

Computing device 100 may include an internal communication infrastructure 150 that may be, for example, a communication bus, e.g., a Controller Area Network (CAN) or other bus, or other system connected to controller 105, operating system 115, memory 120 and I/O module 140 enabling controller 105, operating system 115, memory 120 and I/O module 140 to communicate. I/O module 140 may include ports, or other hardware outlets enabling external devices to communicate with internal components, e.g., I/O module 140 may enable an external device to write data to memory 120, send commands to controller 105 etc.

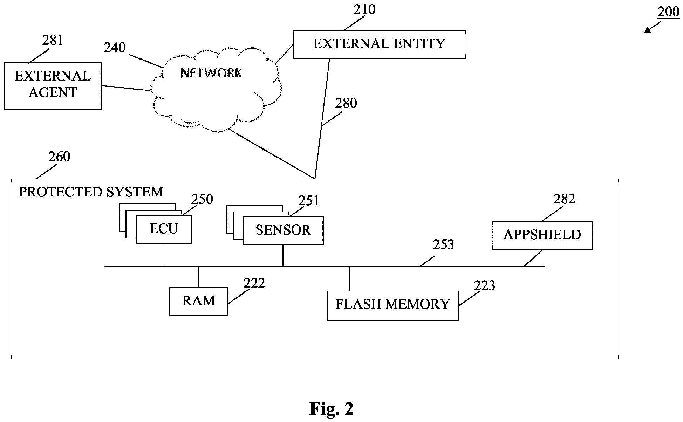

I/O components 135 may be used for connecting (e.g., via included ports) or they may include: a mouse; a keyboard; a touch screen or pad or any suitable input device. I/O components may include one or more screens, touchscreens, displays or monitors, speakers and/or any other suitable output devices. Any applicable I/O components may be included in, or connected to, computing device 100 as shown by I/O components 135, for example, a wired or wireless network interface card (NIC) or chip, a universal serial bus (USB) device or an external hard drive may be included in I/O components 135. For example, when included in an ECU 250, I/O components 135 may be a chip that enables the ECU 250 to communicate with other ECUs 250 or sensors 251 as shown in Fig. 2 and described herein. In other examples, I/O components 135 enable an ECU 250 to store/retrieve data from a storage device, e.g., store/retrieve data in/from flash memory 223. Accordingly, internal communication infrastructure 150 and I/O components 135 enable applications and services running on, or executed by, computing device 100 to communicate with external entities, e.g., a server on the internet.

For the sake of simplicity, storage system 130 is shown as connected to internal communication infrastructure 150, storage system 130 may be connected via I/O module 140, e.g., a port therein.

A system according to some embodiments of the invention may include components such as, but not limited to, a plurality of central processing units (CPU) or any other suitable multipurpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units (e.g., memory 120 in an ECU may include a flash memory and a RAM), and a plurality of storage units. A system may additionally include other suitable hardware components and/or software components. In some embodiments, a system may include or may be, for example, a server computer, a network device and any number of devices, e.g., internet of things (IoT) devices, ECUs in a vehicle, e.g., ECUs included in a car, a train, a boat or an airplane.

Reference is made to Fig. 2 which shows a system 200 according to illustrative embodiments of the present invention. As shown in Fig. 2, a system may include external entity 210 that can or may be any entity which is external to protected system 260. For example, external entity 210 can be a website or a server on the internet.

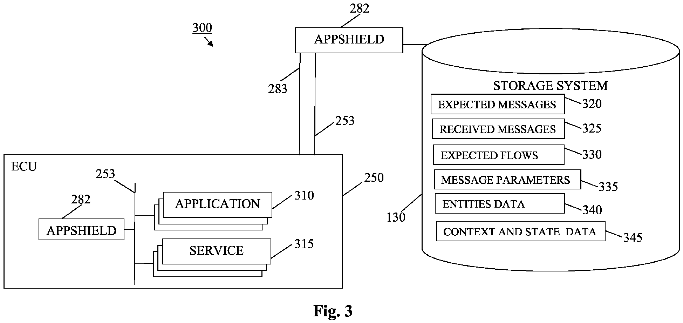

As shown, system 200 may include a protected system 260, a network 240 and a connection line 280 enabling communication between external entity 210 and protected system 260. It will be noted that at least some of the components and elements shown in Fig. 2 as included in system 200 are optional. For example, network 240, which may enable communication between external entity 210 and protected system 260 is an optional element that may be removed from, or non-existent in, system 200 (e.g., as illustrated in Fig. 3). For example, communication between external entity 210 and protected system 260 may be done only over connection line 280 in a system 200 which does not include network 240. As illustrated, network 240 enables external entity 210, external agent 281 and components of protected system 260 to communicate.

External entity 210 may be, or may include components of, a device 100. For example, external entity 210 may be a computer or server as known in the art. As shown, protected systems 260 may include one or more ECUs 250, one or more sensors 251, a communication infrastructure 253 that can be, for example, a bus, a CAN bus or Ethernet or other network infrastructure. As further shown, protected system 260 may include a flash memory 223 and a random-access memory (RAM) 222. It will be noted that flash memory 223 and RAM 222 units or components may be included in some or even all of ECUs 250, sensors 251 and Appshield 282, e.g., when these components are similar to computing device 100 as described.

Protected system 260 may be any device, system, or set of components, e.g., intended to be installed in a vehicle. For example, protected system 260 or parts or components of protected system 260 may be, or may be included or embedded in, an IoT device or a vehicle, e.g., an aircraft, car, train or ship. Although vehicles such as cars are mainly described herein, other vehicles such as ships, trains and aircrafts are similarly applicable, it will be understood that the scope of the invention is not limited by the type, usage or nature of protected system 260. As referred to herein, components of a system, e.g., components of one of ECUs 250, may be software components, e.g., applications, services, routines or other software modules or components. ECUs 250, sensors 251 and may be collectively referred to hereinafter as ECUs 250 and sensors 251, or individually as ECU 250 and sensor 251, merely for simplicity purposes. It will be understood that a protected system as referred to herein can be any system or component, e.g., a vehicle, an ECU or an IoT system or unit. It will further be understood that an internal entity as referred to herein can be a software module (e.g., in an ECU 250) that can be an application or service.

Sensors 251 can include more than a mere temperature or pressure sensing or measuring unit, e.g., a sensor 251 can include a computing device 100 or parts thereof, e.g., a sensor 251 may include a memory 120, a controller 105 and/or executable code 125 and the sensor 251 may store and process measurements, receive network packets and send network packets, messages or frames. For example, a sensor 251 may be an oil pressure sensor, a temperature sensor and the like, e.g., when an embodiment is, or is included in, a train or car or other vehicle. When an embodiment is included in an airplane, ship or spacecraft, a sensor 251 may be a unit that senses or measures, for example, elevation, acceleration, air speed or flow and the like.

ECUs 250 may be, or may include any components of, computing device 100. For example, an ECU 250 may include a controller 105, a memory 120 (e.g., RAM and Flash memories), may include an internal communication infrastructure 150 in the form of a bus, and may include an I/O module 140. Typically, ECUs 250 are associated with, or designed for, specific components, e.g., a first ECU 250 may monitor and control an engine in a car, and a second ECU 250 may monitor and control the windows. When an embodiment is included in an airplane, ship or spacecraft, an ECU 250 may be a line-replaceable unit (LRU), a lower line-replaceable unit (LLRU), a line-replaceable component (LRC), or a line-replaceable item (LRI) component.

Communication infrastructure 253 may be any communication line, bus or network, e.g., an Ethernet network, a CAN bus and the like. For the sake of simplicity, communication infrastructure 253 is referred to herein as network 253 and communication infrastructure 150 is referred to herein as bus 150. Memory 223 may be or may include components of memory 120 as described herein. RAM 222 may be as known in the art, e.g., used by controllers 105 in a system in order to run program applications as known in the art. Communication infrastructure 253 may be any suitable network that enables ECUs 250 and sensors 251 to communicate or exchange digital information, as well as to read/write data from/to memories 222 and 223. Communication infrastructure 253 may be, may include or may comprise any suitable bus or network infrastructure and support any suitable protocols, e.g., in-vehicle network 253 may be an Ethernet network, a CAN network or a combination thereof. Protocols such as, internet protocol (IP), transmission control protocol (TCP), Scalable service-Oriented MiddlewarE over IP (SOME/IP), Universal Measurement and Calibration (XCP), Diagnostics over Internet Protocol (DoIP) and Unified Diagnostic Services (UDS). Any other protocols that may be applicable and used as described herein with reference to "protocols" or "a specific protocol".

Accordingly, numerous elements of communication infrastructure 253are implied but not shown, e.g., switches, routers, gateways etc. It will be recognized that embodiments of the invention are not limited by the nature of communication infrastructure 253.

Network 240 may be any suitable network that enables external entity 210 to communicate with protected system 260 and with external agent 281. For example, network 240 may be a private or public IP network, or the internet, or a combination thereof. Accordingly, numerous elements of network 240 are implied but not shown. For example, network 240 can be, or can included a Wi-Fi network and/or a cellular, or mobile network, and messages exchanged as described between external entity 210 and a system can be transmitted over a Wi-Fi, cellular, or mobile network in network 240.

Connection line 280 may be, or may include, any hardware and software required for directly connecting external entity 210 with one or more ports in protected system 260. For example, connection line 280 may be a wire connected to external entity 210 and with a jack that fits into a jack in an I/O module 140 of protected system 260. For example, connection line 280 can be plugged into a port in protected system 260 such that any communication of data over communication infrastructure 253 is received by external entity 210. Connection line 280 can be plugged into a port in protected system 260 such that external entity 210 can cause transmission of a message over communication infrastructure 253. For example connection 280 may be used for plugging a dongle to a vehicle or connecting the vehicle to a service computer in a service station.

External agent 281 can be a hardware and/or software connected to the internet. For example, external agent 281 can be a web server on the internet configured to receive commands from Appshield 282, perform operations based on commands from Appshield 282 and report results to Appshield 282. Appshield 282 can be a hardware component, e.g., including components of computing device 100 such as a controller 105, a memory 120 and executable code 125. As shown, Appshield 282 can be connected to communication infrastructure 253 such that it can listen to, or obtain, any communication or exchange of messages between components of protected system 260 and between components of protected system 260 and external entities. In some embodiments, Appshield 282 is a software program executed in, or by, a controller 105 in one of ECUs 250. Whether included or embedded in another unit (e.g., included in an ECU 250) or included in system 200 as a standalone or separate unit, Appshield 282 includes executable code 125 which is adapted to preform the logic, tasks and methods for protecting protected system 260 as described herein.

As shown, in some embodiments, Appshield 282 is included or embedded in a protected system, e.g., in an ECU 250. For example, Appshield 282 can be a software module executed by a controller 105 in an ECU 250 or it can be a hardware module included in an ECU 250. For example, connected to internal communication infrastructure 150 in ECU 250, Appshield 282 can receive or obtain any messages sent to/from applications 310 and/or service 315. Similarly, connected to communication infrastructure 253 in protected system 260, Appshield 282 can receive or obtain messages exchanged between ECUs 250 and/or sensors 251.

Accordingly, Appshield 282 can receive or obtain messages exchanged between components which are internal to a protected system as well as receive or obtain messages exchanged between components which are internal to a protected system and components which are external to a protected system. For example, Appshield 282 can receive or obtain messages exchanged between ECUs 250 in protected system 260 or Appshield 282 can receive or obtain messages exchanged between services 315 and/or applications 310 in ECU 250 and Appshield 282 can receive or obtain messages exchanged between external entity 210 and each of ECUs 250, services 315 and/or applications 310.

Reference is made to Fig. 3 which shows a system 300 according to illustrative embodiments of the present invention. As shown, system 300 may include an ECU 250, a storage system 130, an Appshield 282 and a communication infrastructure 253. Although an ECU 250 is shown in Fig. 3 as a protected system 260 it will be understood that other components in protected system 260 are applicable, e.g., a sensor 251 or other components may be protected by Appshield 282 as shown in Fig. 3 and described herein. It will be understood that a protected system can be, or can include, a number of components, e.g., as shown by protected system 260. For example, protected system 260 can be a vehicle and any number of ECUs 250, sensors 251 and other components. In other cases, a protected system can be a single ECU 250 as shown in Fig. 3 and as further described herein.

Connection 283 may be, or may include a number of hardware components, e.g., physical wires connected to physical, hardware ports or jacks or other hardware connections of ECU 250. Appshield 282 can automatically start a validation, verification or protection procedure upon detecting protected system 260 is in a specific state, or has changed state or context. For example, connected to a number of physical ports in ECU 250 over connection lines of connection 283, Appshield 282 can sense, determine or identify that ECU 250 has stopped functioning, crashed, restarted or completed a boot sequence. Connected to a number of physical ports in ECU 250, Appshield 282 can cause ECU 250 to perform various tasks, e.g., reboot, send a message, start/stop a service etc. For example, by signaling ECU 250 over one of connection lines 283 (e.g., by changing voltage/current level of/in a line or wire), Appshield 282 can cause ECU 250 to perform various operations which may be, or may cause or include, sending messages over a network, starting/stopping a service, initiating a flow or procedure and the like. Information received using connection 283 can be used by Appshield 282 in order to determine a state or context of ECU 250.

For example, Appshield 282 can read output produced by ECU 250 on or over connection 283, e.g., ECU 250 may produce output on some ports based on its state or context, e.g., on a pin that indicates a reboot, a context or state. Such state or context may be automatically used by external Appshield 282 in order to select messages to generate as described, determine a response is suspicious and perform an action, e.g., block an external entity from communicating with an internal entity, alert a user and so on. For example, based on information of one or more of entities data 340, expected messages 320 and/or expected flows 330, Appshield 282 expects specific messages to be sent by an ECU 250 following a reboot, or when assuming a specific state. Accordingly, Appshield 282 can determine a state or context of an ECU 250 by sensing the ECU 250 via connection 283 and can further determine which messages the ECU 250 is expected to send or respond to based on the determined state or context.

As further shown, an ECU 250 may include a number of applications 310 and/or a number of services 315. For example, a memory 120 in ECU 250 may include executable code 125 adapted to provide services 315 and/or execute applications 310. Applications 310 and services 315 may be collectively referred to hereinafter as applications 310 and services 315 or individually as application 310 and service 315, merely for simplicity purposes. For example, applications 310 and services 315 may be ones that perform web browsing, money transactions, payment, e.g., payments at gas stations or other payments, e-banking and the like. In other cases, applications 310 and services 315 may be ones that perform installations, updates or purchase of applications, e.g., by communicating with online applications stores.

Various examples of installation or deployment of an Appshield 282 unit are described herein. It will be understood that an Appshield 282 unit can be connected to many components, e.g., via a connection to an internal bus or network in a vehicle as shown in Fig. 2, and/or connected to a specific unit, e.g., connected to an ECU 250 as shown in Fig. 3 and/or included or embedded in a component, e.g., embedded in ECU 250 as a software library as illustrated in Fig. 3. A system can include one or more Appshield 282 units, e.g., one connected to a bus, another connected to a sensor 251 and yet another embedded in an ECU 250.

For example when embedded in an ECU 250, an Appshield 282 unit can obtain, or see messages flowing over an internal bus, such messages may be unavailable to an external Appshield 282. In contrast, an external Appshield 282, e.g., one external to ECUs 250 but connected to communication infrastructure 253 can see or obtain messages destined to an ECU 250 where such messages are unavailable to in internal or embedded Appshield 282.

As shown, storage system 130 connected to Appshield 282 may include expected messages 320, received messages 325, expected flows 330, messages' parameters 335, entities data 340 and context and state data 345 all of which can be used by Appshield as further described herein.

Expected messages 320, received messages 325, expected flows 330, messages' parameters 335 and entities data 340 may be collectively referred to hereinafter as Expected messages 320, received messages 325, expected flows 330, messages' parameters 335 and entities data 340, or individually as expected message 320, received message 325, expected flow 330, message parameters 335 and entity data 340, merely for simplicity purposes.

Expected messages 325 can be, or can include, pre-configured list of expected responses, e.g., as expected to be received from an external entity as described. Expected messages 325 can be, or can include, pre-configured list of expected messages or requests, e.g., messages expected to be sent from one internal entity to an external entity and/or messages expected to be sent from one internal entity to another internal entity. An expected message 320 may define, list or describe a message which Appshield 282 expects to receive, e.g., in response to a message previously sent, following an event or when a protected system is in a specific state or context.

A received message 325 may be a message received, e.g., from external entity 210, possibly in response to a message sent by Appshield 282 or by ECU 250, to external entity 210. A received message 325 may be a message received by ECU 250 and passed on to Appshield 282. A received message 325 may be a message received from external agent 281.

An expected flow 330 may list, describe or define a flow of messages. For example, an expected flow of messages may list and describe a sequence of messages exchanged between ECU 250 and external entity 210 where the description includes description of headers (e.g., source/destination addresses, size and content of message, time intervals between messages etc.

Message parameters 335 may include, list and describe various parameters of messages, e.g., size and content of messages. Message parameters 335 may be used by Appshield 282 for two purposes, for checking received messages and for generating messages as further described.

Entities data 340 may include information and data related to entities in a protected system. For example, entities data 340 may include a full description of an ECU 250. For example, entities data 340 includes, possibly for each ECU 240 in protected system 260, the type of ECU 250, its functions, the subsystems the ECU 250 controls and so on. In some embodiments, entities data 340 includes up to date or event real-time data, e.g., the current state and context of an ECU 250. Entities data 340 can include data related to software entities, for example, entities data 340 includes the state and context of a service 315 or the state and context of an application 310, e.g., whether a service 315 is up and running, shutting down or is being initialized.

Context and state data 345 may include information describing, or related to, a context or state of a protected system as well as information describing, or related to, a context or state of components of a system. For example, in the case where protected system 260 is a vehicle, context and state data 345 can describe a state of the vehicle, e.g., the vehicle is in motion, the speed the vehicle is traveling in, whether or not the engine is running, engine temperature, engine oil pressure and the like.

In some embodiments, a method of detecting malware includes initiating a mock transaction by sending a message to an entity internal to a system or to an entity external to the system. A mock transaction or message as referred to herein may be a dummy message or transaction which for most aspects and purposes resembles a real transaction or message, however a mock transaction or message is intended to verify a connection is safe but is not intended to cause any other effects.

For example, a mock transaction or message with/to a banking application or service may attempt to transfer payment of zero ("0") Dollars to/from a bank account thus causing no real effect or money transfer but still verifies the communication with the banking application is safe.

For example, using information in message parameters 335 and/or entities data, Appshield 282 generates or compiles a (mock) message and sends the generated, mock message to external entity 210. A mock transaction or message as referred to herein may be (or it may include) a message that for all intents and purposes seems to be a message generated by, or sent, or coming from, a component in a protected system. For example, Appshield 282 generates and sends a mock message to external entity 210 where, for all intents and purposes, the mock message seems to be sent from one of ECUs 250 or one of services 315 to external entity 210. Otherwise described, Appshield 282 "fools" external entity 210 into thinking that the message came from one of ECUs 250 or from one of services 315, from one of applications 310 or from one of sensors 251.

In some embodiments, a method of detecting malware further includes obtaining a message communicated between an external entity and an internal entity. For example, having sent a mock message as described, Appshield 282 captures or otherwise obtains a response, from external entity 210, to the mock message sent by Appshield 282 as described.

In some embodiments, a method of detecting malware further includes determining that a malware in a system is modifying, or is otherwise intervening in, a communication between an external and internal entity, based on the content of a message received in response to a mock message. For example, having sent a mock message appearing to be sent from a service 315 to external entity 210, Appshield 282 captures a response from external entity 210 to the mock message, stores the response as received message 325, and compares the response message to headers or content in an expected message 320, if at least some headers or content in the response message do not match those in the expected message 320, then Appshield 282 determines that some entity is intercepting or is intervening in, the communication between service 315 and external entity 210. For the sake of clarity and simplicity, an entity internal to, or included in a protected system (e.g., a service 315, an application 310 or one of ECUs 250) is simply referred to herein as an internal entity, similarly an entity external to a protected system (e.g., external to protected system 260) is simply referred to herein as an external entity.

In some embodiments, determining a message communicated between internal and external entities was intercepted by a malicious entity is based on comparing a message communicated during, or as part or result of, a mock transaction, and a message destined to the internal entity. For example, a message destined to the internal entity may be stored as an expected message 320 where the expected message 320 is received from the internal entity. For example, possibly during a learning phase, a service 315 sends a request to external entity 210, receives a response from external entity 210, and sends (or otherwise provides) the response to Appshield 282 which in turn stores the response message as expected message 320, subsequently, Appshield 282 uses the response message as an expected message 320 as described. In other cases, Appshield 282 sniffs a communication bus or network, identifies a response message sent from external entity 210 to an application 310 and stores the response message as an expected message 320.

Many expected messages 320 are typically stored in storage 130. For example, a first expected message 320 is stored in association with a first request (or other) message that may be sent from an application 310, a second expected message 320 is stored in association with second request (or other) message that may be sent from a service 315, a third expected message 320 is stored in association with a third request (or other) message that may be sent from (the same or other) application 310, a fourth expected message 320 is stored in association with a fourth request (or other) message that may be sent one of ECUs 250 and so on.

While expected messages 320 may be dynamically set or stored, e.g., during normal operation of a system or during a learning or staging phase, in some embodiments expected messages 320 are preconfigured or prestored in storage 130. For example, if applications 310 and/or services 315 are known then the messages they send and the responses they are expected to receive are also known in advance, accordingly, expected messages 320 may be preconfigured and stored in storage system 130.

An expected message 320 needs not include an entire expected message, for example, only specific fields in headers of messages or specific values or parameters of expected messages may be stored in expected messages 320. For example, only selected fields or parameters such as the size of specific requests or responses, the source/destination addresses and the like may be stored in an expected message 320 and Appshield 282 verifies or validates messages and/or responses by comparing the selected fields in received messages (e.g., stored as received message 325) to those in expected messages. In some embodiments Appshield 282 verifies some or event all messages using expected messages 320, that is, Appshield 282 receives a message, compares selected fields, values or parameters in the received message 325 with an expected message and if a match is found then Appshield 282 determines the message is valid and no malicious entity has modified the message, and, if a mismatch is detected then Appshield 282 determines that a hostile entity is modifying, or is otherwise intervening in, a communication between an external and internal entity.

In some embodiments, determining the message was intercepted is based on predefined indicators in the message. For example, predefined indicators can be a destination address in a request or in a response, a size of a message and the like. Predefined indicators can be fields or values in a webpage, or a submission destination address in a form in a webpage.

In some embodiments, determining a message was intercepted is based on comparing the message to an expected message. For example, Appshield 282 compares a message sent from external entity 210 to a service 315 to an expected message 320 and if a mismatch is found, e.g., a mismatch between a source address in the message sent from external entity 210 with a source address in the expected message 320, then Appshield 282 determines some hostile or malicious entity is modifying messages communicated between external entity 210 and the service 315.

In some embodiments, expected message 320 is received from an internal entity in the vehicle. For example, following a specific request from external entity 210, an ECU 250 receives a specific response from external entity 210 and forwards the specific response to Appshield 282 which stores the specific response, in association with the specific request, as an expected message 320. From such point on, when Appshield 282 identifies transmission of the specific request, Appshield 282 validates the resulting response with the stored expected message 320.

In some embodiments Appshield 282 and a protected system or a component therein communicate. For example, prior to issuing a request to external entity 210, an application 310 sends parameters or values expected to be present in a response to Appshield 282, Appshield 282 then uses the parameters or values received from application 310 in order to determine whether or not a response from external entity 210 is as expected. For example, an application programing interface (API) may be called by application 310 in order to provide Appshield 282 with an expected message or response. In other cases, Appshield 282 uses an API in order to receive, e.g., from a service 315, an expected parameter or an expected message 320. Accordingly, an expected message 320 can be dynamically defined, in real-time thus an expected message/response 320 can be dynamically, at runtime, defined and/or recorded according to dynamic, real-time or runtime changes of a system. In yet other cases and as described herein, e.g., based on information in expected messages 320 or information in expected flows, Appshield 282 can know or predict a response to a specific message or request, using such information and having seen or obtained a message or request, Appshield 282 checks the response to the message or request and determines whether or not the response is suspected as one that was modified by a third party, e.g., a malware that intercepts and modifies messages.

In some embodiments, Appshield 282 obtains or receives, from external agent 281, a message received by agent 281 from external entity 210 and uses such message in order to determine that a message was intercepted based on comparing the message received from external agent 281 to a message destined to a protected system. For example, external agent 281 can be a server on the internet which located outside a protected system 260 and which is adapted to send, to external entity 210, requests similar (or even identical) to those typically sent by an application 310, receive a response to such requests from external entity 210 and send the received response to Appshield 282 thus providing Appshield 282 with a proper, valid response sent by external entity. Using an external agent 281 enables a system according to embodiments of the invention to bypass or circumvent any malicious entity that may be tapping communications between protected system 260 and external entity 210. Accordingly, embodiments of the invention can obtain a response from external entity 210 which is guaranteed to be valid, legitimate, proper, or untampered with, and such valid response can then be used, by Appshield 282 to validate responses sent from external entity 210 to a protected system. For example, external agent 281 can be provided with various data, information or parameters enabling external agent 281 to mimic an application 310 or a sensor 251 such that responses provided by external entity 210 to components in a protected system are obtained and, when provided to Appshield 282, such responses can be used, by Appshield 282 in order to determine whether the responses are valid, namely, are as sent by external entity 210 and have not been modified by a third party or malicious entity.

In some embodiments, initiating a mock transaction comprises receiving, from an entity which is internal to a protected system, at least one parameter to be used in a communication with the external entity. For example, an application 310 provides Appshield 282 with the internet protocol (IP) address of external entity 210 and Appshield 282 then uses the IP address, that is, Appshield 282 send a (mock) message to the IP address it received from application 310. Various other parameters or values may be received, by Appshield 282 from an internal component and can be used, by Appshield 282 in a mock message or transaction, e.g., Appshield 282 can receive from an application 310 a specific service code requested from a webserver (external entity 210), a specific timeout value and the like and Appshield 282 can use such parameters in generating (and then sending) a mock transaction or message as described.

In some embodiments, an internal entity informs or alerts Appshield 282 it is about to communicate with an external entity, then the internal entity waits for Appshield to perform a mock transaction which verifies that communication with the external entity is safe and, only after being notified, by Appshield 282 that communication with the external entity is safe the internal entity performs the actual communication with the (now verified) external entity.

For example, prior to performing a sensitive operation, e.g., transferring payment to a webserver (external entity 210), an application 310 provides Appshield 282 with parameters it intends to use in the payment and waits for Appshield 282 to inform it that it is safe to communicate with the webserver. Provided with parameters from application 310, Appshield 282 performs a mock transaction with the webserver, that is, uses the parameters received from application 310 to generate and send a message to the webserver and receives a response therefrom, verifies the response from the webserver is valid, e.g., by comparing parameters and values in a received message 325 with those in an expected message 320, and, based on the comparison, verifies that communication with the webserver is safe. If determining communication with the webserver is safe, that is, no third party or man in the middle is modifying messages exchanged with the webserver, Appshield 282 informs the application 310 it can safely proceed to communicating with the webserver.

For example, some or even all of the internal entities can be modified, or adapted to communicate with Appshield 282 before, or prior to, communicating with external entities, e.g., using a dedicated API. Accordingly, some embodiments verify that communication with external entities dynamically, in real-time thus continuously providing secured communication with external entities in real-time.

As described, a parameter received by Appshield 282 from an internal entity can be used in a communication with an external entity and the parameter can further be used to determine a man-in-the-middle (MITM) malware is intercepting communication between the external and internal entities. For example, a MITM malware can intercept a message from a service 315 (e.g., a message including bank details and/or payment) and modify the destination IP address such that instead of the message being sent to a legitimate (intended) webserver, the message is sent to a webserver cooperating with the MITM malware. In this example, using the IP address received from the service 315, Appshield 282 generates a mock transaction or message, e.g., one indicating a transfer of zero ("0") dollars and Appshield further checks the source IP address of a response to the mock transaction, if the source IP address in the response is not the one expected (the IP address of the intended server) then Appshield 282 determines that a MITM malware is intercepting and modifying messages destined to the intended server such that they are sent to a hostile web server.

Having determined communication with an external entity is unsafe Appshield 282 can take a number of actions. For example, Appshield 282 can block communication a webserver or other entity, Appshield 282 can prevent a service 315 from communicating with external entities or with specific external entities and/or Appshield 282 can alert a user, record the event etc.

In some embodiments, Appshield 282 detects that interception and/or modification of messages are taking place inside a protected system. For example, a MITM malware can reside inside protected system 260 or inside an ECU 250, e.g., in the form of malware executed on a controller 105 of an ECU 250. Such internal malware can intercept and modify messages sent from an internal entity to an external entity. In some embodiments, to protect against an internal malware or hostile entity, Appshield 282 examines messages sent out from a protected system and, if determining a message has been modified or tampered with, Appshield 282 may perform a number of actions, including blocking a message from being sent to an external entity, preventing an internal component from communicating with external entities, record an event and alert a user.

In some embodiments, Appshield 282 receives one or more parameters from an internal entity, e.g., a parameter or value which is used, by the internal entity, in communicating with an external entity and Appshield 282 uses the received parameter to determine a message sent, from the internal entity to the external entity has been modified or tampered with. As described, Appshield 282 can be connected bus or network which is internal to a protected system, e.g., to communication infrastructure 253, accordingly, Appshield 282 can receive or obtain any message sent from any internal entity or component to any external entity. Provided with identifiers, values or parameters describing, identifying or otherwise related to messages sent from internal entities to external entities, Appshield 282 can validate or verify the authenticity of messages sent from internal entities to external entities.

For example, Appshield 282 can be provided with a specific destination IP or other address in messages that can, or are allowed be used by, a specific application 310 (or a specific service 315 or specific ECU 250) and, if detecting that a message from the specific application 310 is destined to an address other than the specific, allowed destination IP, then Appshield 282 determines the message has been modified by a hostile entity residing inside protected system 260.

For example, entities data 340 can include, for each of ECUs 250 sensors 251, application 310 and services 315, a list of allowed IP addresses, a maximum size of messages that can be sent etc. and Appshield 282 can use such information in order to validate messages sent from each of the internal entities. For example, to communicate with external entity 210, a service 315 sends a message over communication infrastructure 253, the messages is received by I/O module 140 and communicated over a network by I/O, accordingly, connected to communication infrastructure 253 as illustrated in Fig. 2 and in Fig. 3, Appshield 282 can obtain the message prior to the message being sent out from a protected system, can validate the message and can further block the message if determining the message is not as expected, that is, the message is not as sent by a service 315 but has been modified by some MITM malware inside protected system 260 or inside an ECU 250.

In some embodiments, Appshield 282 continuously monitors communications of internal entities or components, e.g., by sniffing or eavesdropping communication infrastructure 253, examines messages sent by components in a protected system 260 and determines that a communication or data transaction was performed but with different parameters then those expected. Such difference between expected and seen messages or communication causes Appshield 282 to determine that a malware in a protected system is intervening in data communications, in such case, Appshield 282 may perform several actions, including, blocking a component from communicating over an internal infrastructure, alerting a user, recording a suspicious message etc.

By obtaining messages communicated over in internal infrastructure as described and checking the validity of the messages Appshield 282 can identify that a malicious entity is intervening in communication between internal entities. For example, a message between a first application 310 and a second application 310 or between a service 315 and an application 310 can be modified or tampered with by a malware. Such intervention of malware in communication between internal components in a protected system 260 can be identified by Appshield 282. For example, equipped with descriptions of valid messages in entities data 340 as described, Appshield 282 identifies that a specific application 310 is attempting to communicate with a specific service 315, however, per data related to the specific application 310, Appshield 282 realizes, identifies or determines that the specific application 310 is not expected to ever communicate with the specific service 315 and thus the attempted communication was not made by the specific application 310, rather, a malware is impersonating, or pretending to be, the specific application 310. In such case, Appshield 282 may block the communication or message, scan a system for malware, record the event, alert a user etc.

In some embodiments determining the message was intercepted is based on a flow/sequence of messages. For example, Appshield 282 identifies a threat based on a deviation of a flow or sequence of message from an expected sequence or flow.

For example, if a message exchanged between an external entity and internal entity is not preceded by a specific one or more messages or by a specific data transaction then Appshield 282 determines the message is related to malicious activity. In another example, if a message exchanged between an external entity and internal entity is not followed by a specific one or more messages or by a specific data transaction then Appshield 282 determines the message is related to malicious activity. For example, a message related to malicious activity is a message sent by a MITM entity which is impersonating, or pretending to be, an application 310 or a sensor 251. In other cases, a message related to malicious activity is a message which was intercepted and then modified by a MITM entity.

In some embodiments, a deviation of a flow or sequence of messages from an expected flow or sequence is identified, by Appshield 282, based on information in expected flows 330. For example, flows describing messages advertising services by services 315 followed by requests for the advertised services are described, for each of services 315, in expected flows 330. Other flows described may be sequences of messages sent by applications 310 upon initialization or boot. Another example of known or expected flows described in expected flows 330 includes a read request from a sensor 251 and a response from the sensor 251, for example, upon receiving a read request, a sensor 251 may be configured to send a first message acknowledging the request, a second message providing the requested reading and a third message informing an indication whether or not the reading is within normal range. Accordingly, equipped with expected flows, including expected content of messages in flows, Appshield 282 can readily identify a deviation of a flow or sequence of messages from an expected flow or sequence.

For example, a deviation of a flow or sequence of messages from an expected flow or sequence identified by Appshield 282 may be a response from a specific service 315 which is not preceded by a request for a service to be provided by the specific service 315. Another example of a deviation of a flow or sequence of messages from an expected flow which is identified by Appshield 282 is a message requesting a service, from a specific service 315, which is not preceded by a message, from the specific service 315, which advertises the service. Yet another deviation of a flow or sequence of messages from an expected flow or sequence identified by Appshield 282 may be a response from external entity 210 to an application 310 which is not preceded by a request or query from the application 310.

In some embodiments, Appshield 282 continuously monitors, tracks and/or records flows and continuously verifies or validates flows and compares or relates tracked flows to data in expected flows 330, accordingly, Appshield 282 is capable of verifying flows over time. For example, upon seeing or obtaining a message from a specific service 315, Appshield 282 checks data related to the specific service 315 in expected flows 300 and determines which message is expected next.

In some embodiments, expected flows 330 includes timing information. For example, having sent a specific message to a service requestor, a specific service 315 is configured to wait a specific time interval for an acknowledgement from the requestor before terminating or abandoning the session with the requestor and thus, an acknowledgement, message or response from the requestor coming after the time interval will not be answered, or responded to by the specific service 315. Such time interval may be stored, for the specific service 315, in expected flows 330 and may thus be known to Appshield 282. Accordingly, if after detecting the specific message sent from the specific service 315 and after the time interval has passed or elapsed, an acknowledgement from the requestor is responded to by the service 315, Appshield 282 determines that the flow is suspicious, e.g., it is not the service 315 who responded to the requestor but rather, a malware imitating the service 315 is responding to the requestor. In other cases, wrong values in a network protocol header, e.g., wrong sequence number, wrong or unexpected protocol or destination port in a transmission control protocol (TCP) header can cause Appshield 282 to determine that a MITM malware is attempting to communicate with a service 315 or application 310.

Any deviation from an expected flow as well as any message or event identified as suspicious by Appshield 282 is identified by Appshield 282 as a threat and causes Appshield 282 to perform one or more actions such as alerting a user, recording information related to the suspicious event, block transmission or communication to/from a suspicious entity or any other prevention action. Accordingly, it will be understood that Appshield 282 acts as described upon detecting a threat even if such action is not specifically described with respect to identifying a threat or breach as described.

In some embodiments, Appshield 282 determines a message was intercepted, e.g., by a MITM entity based on a configuration which is dynamically updated. For example, any one of expected message 320, received message 325, expected flow 330, message parameters 335, entities data 340 and context and state data 345 can be updated at any time (including runtime) by a remote server which is configured to communicate with Appshield 282 such that as new threats are discovered or as new components are added to a system, the system is maintained up to date. For example, new indicators of malware presence (e.g., type of messages a malware sends) can be downloaded, from a webserver to Appshield 282 at any point in time, or during operation of a system as described.

In some embodiments, Appshield 282 updates configuration data in storage 130. For example, the information in context and state data 345 can be dynamically updated by Appshield 282 as a vehicle changes state and context, or Appshield 282 updates information in entities data 340 as services 315 or ECUs are initialized, rebooted or shut down etc.

In some embodiments, Appshield 282 obtains a message sent from an internal entity to an external entity; and determines the message is suspicious based on at least one of: a destination address, a pattern in the message, templates of malware's injections, and a difference between the message and an expected structure or content. For example, templates of code injections may be the combination of username and password (username/password) which a malware may use to modify a message. For example, using information in expected messages 325, Appshield 282 identifies a suspicious destination address in a message, a suspicious pattern in a message or suspicious structure or content in a message. In another example, a list of one or more Uniform Resource Locators (urls), e.g., included in entities data 340 is used by Appshield 282 to verify a message from an entity.

For example, in the case where external entity 210 is a webserver, access to external entity 210 is performed using a specific url as known in the art and such specific url may be stored in entities data 340, if Appshield 282 identifies, in a message, a url which is different from the url recorded in entities data 340 then Appshield 282 determines the message is suspicious, e.g., a malware is attempting to divert communication with external entity 210 to a different webserver, e.g., a webserver controlled by a hostile entity. For example, legitimate, known or trusted urls pointing to , legitimate, known or trusted webservers is stored in message parameters 335 and any url appearing in a message which is not recorded in message parameters 335 is considered by Appshield 282 as illegitimate causing Appshield 282 to determine a malicious entity is active in protected system 260. In another case, Appshield 282 can inspect a webpage pointed to by a message, search the webpage of allowed or forbidden forms or other content and determine the message is suspicious if forbidden or blacklisted forms or other content is identified in the webpage.

In some embodiments, determining whether a message was intercepted or is suspicious is performed by an agent included in an internal entity. For example and as shown by Appshield 282 included in an ECU 250 in Fig. 3, Appshield 282 can be an agent or software module which is included in an ECU 250 and Appshield 282 may operate as described inside, or from within the ECU 250.

In some embodiments, determining a message was intercepted is based on at least one of: usage of the internal entity, type of the internal entity, software included in the internal entity, hardware included in the internal entity, state of the internal entity, a context of the internal entity and a condition of the internal entity.

For example, information in entities data 340 indicates a first ECU 250 controls the infotainment unit in a vehicle, a second ECU 250 is an engine ECU, a third ECU controls the telematics system and so on. Based on the type of an ECU 250, Appshield 282 knows which messages the ECU 250 is expected to send, which protocol the ECU 250 is expected to use, using such information, Appshield 282 can predict or expect a behavior of the ECU 250 and can thus identify suspicious behavior or messages sent by the ECU 250. Based on the type and version of software in an ECU 250 which are recorded, for each ECU 250 in entities data 340 Appshield 282 can further predict valid messages that the ECU 250 will send or will respond to. Similarly, based on hardware modules or units in an ECU 250 Appshield 282 can expect behavior and function of the ECU 250 and/or expected messages.

Context, state and condition of an ECU 250 are also used by Appshield 282. For example, specific messages are expected to be sent by an ECU 250 during initialization, boot or reboot while other messages are expected when the ECU 250 is up and running and yet other messages are expected when the ECU 250 is performing a shutdown. For example, if entities data 340 indicates that a specific service 315 is shutting down then a message advertising services provided by the specific service 315 are not expected and may thus indicate a malware is impersonating, or pretending to be, the specific service 315. Otherwise described, Appshield 282 processes messages to/from components in a protected system based on the condition, state or context of the components.

In some embodiments, Appshield 282 performs checks continuously, periodically and/or upon specific events. For example, Appshield 282 may send a mock message as described every minute, every ten minutes or once a day such that presence or activity of malware is periodically checked. In another example, an event of starting an engine in a car causes Appshield 282 to send mock messages and verify all connections to outside or external entities are safe. Accordingly, Appshield 282 may perform actions, operations and methods as described continuously, periodically or upon event.

In some embodiments, methods and operations described here are performed based on a state and/or context of a protected system. Context, state, and condition taken into consideration by Appshield 282 may be those of an entire protected system 260. For example, if protected system 260 is a vehicle and, context and state data 345 indicates the engine is not running then a message from a sensor 251 indicating high oil pressure or engine overheating may cause Appshield 282 to act, e.g., alert a user or perform other actions as described when determining a malware is present or active or a system is under attack. Any logic involving a state of ECUs 250, sensors 251, services 315 and/or applications 310 can be used by Appshield 282 as described. For example, if context and state data 345 indicates the engine is not running then any message from a sensor 251 related to engine may be regarded by Appshield 282 as suspicious or as an indication of malware activity.

In some embodiments a method as described herein is performed prior to enabling an internal entity to communicate with the external entity. For example, Appshield 282 initiates a mock transaction upon receiving request/indication from an internal entity or upon being notified, by the internal entity, it intends, or is about, to communicate with an external entity.

For example, a banking application 310 is configured to inform (e.g., using an API or a message) Appshield 282 it intends, wants or is about to communicate or interact with a banking application in external entity 210. In response, Appshield 282 verifies communication with the banking application in external entity 210 is safe by initiating a mock transaction, e.g., sending a mock message as described, verifies responses from the banking application in external entity 210 are as expected and then Appshield 282 informs the banking application 310 that it can safely proceed to interact with the banking application in external entity 210. Accordingly, verifying communication with an external entity may be done per or upon request, dynamically and in real-time, such that safety is always verified as close as possible to a risky operation.

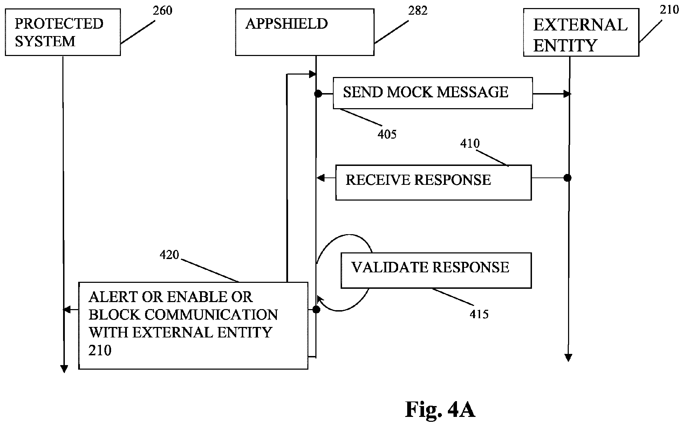

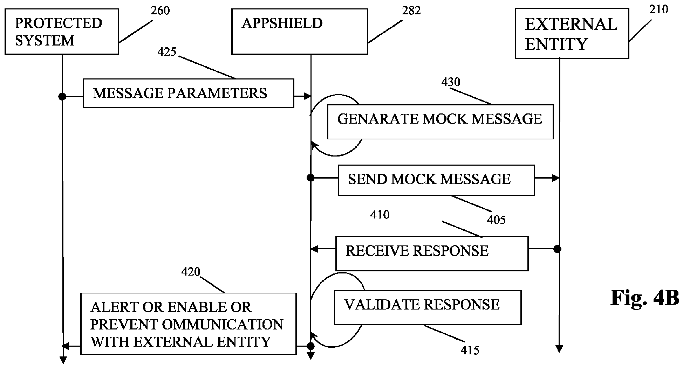

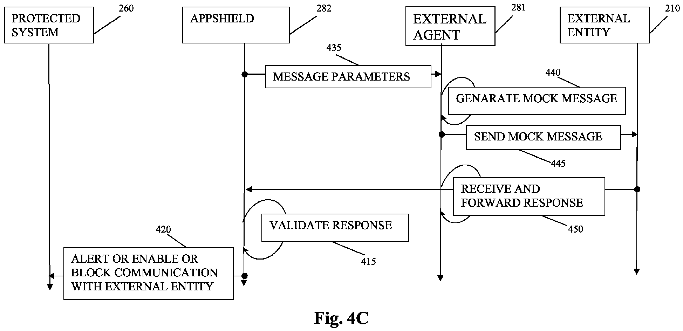

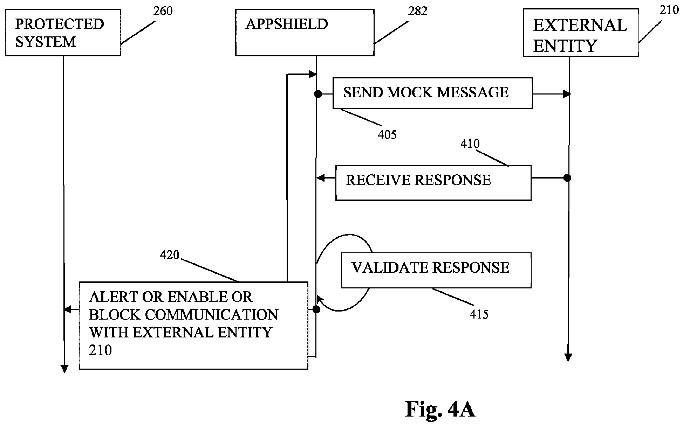

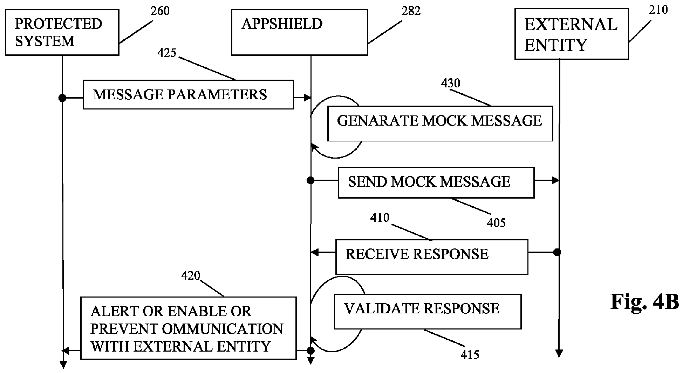

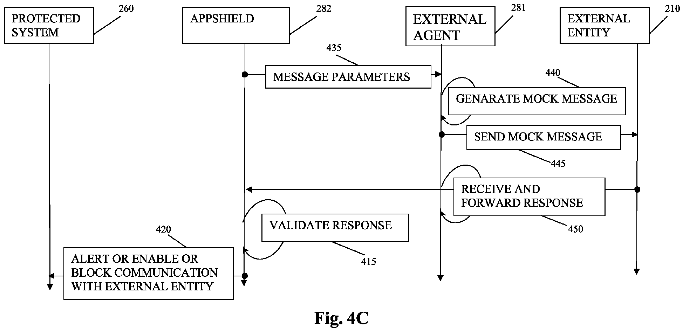

Reference is made to Figs. 4A, 4B and 4C which show flows according to illustrative embodiments of the present invention. As shown by block 405 in Fig. 4A, in some embodiments, Appshield 282 autonomously, automatically and/or periodically sends a mock message to external entity 210. For example, to continuously ensure that communication with external entity 210 is safe, Appshield 282 periodically initiates the flow shown in Fig. 4A. As further shown in block 410 of Fig. 4A, Appshield receives a response from external entity 210 and, as shown in block 415, Appshield 282 validates the response, e.g., using information in expected messages 320, received messages 325, expected flows 330, messages' parameters 335, entities data 340 and context and state data 345 as described herein. As further shown by block 420 in Fig. 4A, having validated the response from external entity 210, Appshield 282 enables communication with external entity 210, e.g., by informing relevant components or by permitting, or lifting a block from, communication with external entity 210. As shown by block 420, if the response received as shown by block 410 is not validated, e.g., it does not match an expected message 320 or it violates an expected flow 330 then Appshield 282 takes action, e.g., alerts a user and/or blocks or prevents further communication with external entity 210, alerts a user or administrator, records the event, recording and/or informing services and applications that external entity 210 is now blacklisted etc.

As shown by block 425 in Fig. 4B, a flow can be initiated by protected system 260. For example, a service (or a dedicated unit) in an ECU 250 can send, to Appshield 282, parameters to be used in one or more mock messages. For example, parameters to be used can be an IP address or port, a url as well as an expected size of the response, an expected delay etc. A message including parameters as shown by block 425 can be a triggering event or an indication that a component is about to communicate with external entity 210. For example, an ECU 250, or applications or services installed therein, can be configured such that when an application intends to communicate with external entity 210 it first communicates with Appshield 282 as shown by the flow in Fig. 4B and, only after receiving permission from Appshield 282, the application proceeds to communicating with external entity 210.

As shown by block 430, Appshield 282 uses the parameters to generate a mock message, e.g., Appshield inserts received addresses and url into a message it generates. Sending a mock message, receiving a response, validating the response and communicating with protected system 260 as shown in the flow in Fig. 4B are as described with respect to Fig. 4A. If validation as shown by block 415 in Fig. 4B is successful, that is, the message received as shown by block 410 in Fig. 4B is validated, e.g., is as expected, then Appshield 282 enables communication between protected system 260 and external entity 210. As further shown by block 420 in Fig. 4B, if validation fails, e.g., the message received as shown by block 410 in Fig. 4B is not as expected, then Appshield 282 alerts a user and/or blocks or prevents further communication between protected system 260 and external entity 210.

As illustrated in the flow in Fig. 4C, an external agent 281 may participate in a flow. For example, as shown by block 435, Appshield 282 sends message parameters to external agent 281 and, as shown by block 440, external agent 440 generates a mock message using the parameters received from Appshield 282. For example, to generate a mock message, external agent 281 uses the same logic used by Appshield 282 as described herein. As shown by block 445, external agent 281 sends the generated mock message to external entity 210 and, as shown by block 450, external agent 281 forwards a reply or response it receives to Appshield 282. As further shown by blocks 415 and 420 in Fig. 4C, Appshield 282 validates the message received from external agent 210 and acts according to whether or not the message is validated.

If validation as shown by block 415 in Fig. 4C is successful, that is, the message received as shown by block 450 in Fig. 4C is validated, e.g., is as expected, then, as shown by block 420 in Fig. 4C, Appshield 282 enables communication between protected system 260 and external entity 210. As further shown by block 420 in Fig. 4C, if validation fails, e.g., the message received as shown by block 450 in Fig. 4C is not as expected, then Appshield 282 alerts a user and/or blocks or prevents further communication between protected system 260 and external entity 210.

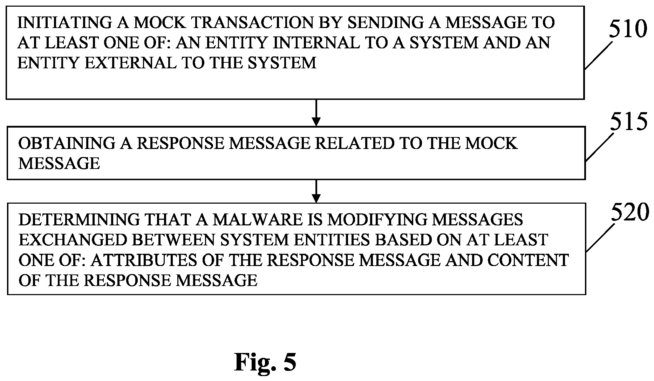

Reference is made to Fig. 5, which shows a flowchart of a method according to illustrative embodiments of the present invention. As shown in block 510, a method according to an embodiment of the invention includes initiating a mock transaction by sending a mock message to at least one of: an entity internal to a system and an entity external to the system. For example, a mock transaction or message may be generated and sent as shown by blocks 430 and 405 in Fig. 4B and described herein. As shown by block 515, the method includes obtaining a response message related to the mock message. For example, Appshield 282 receives a response message directly from external entity 210, or from external agent 281, or from an application or service in an ECU 250. Accordingly, Appshield 282 can obtain a message from external entity 210 in more than one way.

As shown by block 520, a method can further include determining that a malware is modifying messages exchanged between system entities based on at least one of: attributes of the response message and content of the response message. For example, Appshield 282 determines that a malware is modifying messages exchanged between system entities and/or external entities if an address in a message is not as expected, a pattern or other content is not found in the message and so on. As described, if a validation process carried by Appshield 282 as described fails, e.g., content or attributes of a message are not as expected, then Appshield 282 prevents or prohibits further communication with the entity involved (e.g., external entity 210), records the event, alerts a user etc. If validation is successful, then Appshield 282 can enable or permit communication between the relevant entities.

In the detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.

## Claims

1. A method of detecting malware in a vehicle or in an Internet-of-Things, IoT, device, the method comprising:
initiating a mock transaction by sending a mock message to at least one of: an entity internal to a system and an entity external to the system;
obtaining a response message related to the mock message; and
determining that a malware is modifying messages exchanged between system entities based on at least one of: attributes of the response message and content of the response message.

2. The method of claim 1, wherein determining the response message was intercepted is based on comparing a message received in the mock transaction and a message destined to the internal entity.

3. The method of claim 1 or 2, wherein determining the response message was intercepted is based on comparing the message to an expected message.

4. The method of any one of the preceding claims, wherein the response message is received from an internal entity in the system.

5. The method of any one of the preceding claims, comprising obtaining, from a forwarding component which is external to the vehicle, a response message received by the forwarding component from the external entity, wherein determining the response message was intercepted is based on comparing the obtained message with the message received from the forwarding component.

6. The method of any one of the preceding claims, wherein initiating the mock transaction comprises:
receiving, from the internal entity, at least one parameter to be used in a communication with the external entity;
using the at least one parameter for generating a message; and
sending the message to the external entity.

7. The method of any one of the preceding claims, comprising:
receiving, from the internal entity, at least one parameter to be used in a communication with the external entity; and
determining a malware is intercepting communication between the external and internal entities based on the at least one parameter.

8. The method of any one of the preceding claims, comprising:
receiving, from the internal entity, at least one parameter to be used in a communication with the external entity; and
using the at least one parameter to determine a message sent to the external entity is suspicious.

9. The method of any one of the preceding claims, comprising initiating the mock transaction upon receiving request/indication from the internal entity.

10. The method of any one of the preceding claims comprising:
obtain a message sent from the internal entity to the external entity; and
determine the message is suspicious based on at least one of:
a destination address,
a list of allowed destination addresses (per application),
a pattern in the message,
templates of malware's code injections, and
a difference between the message and an expected structure or content.

11. The method of any one of the preceding claims, wherein determining the message was intercepted is based on at least one of: usage of the internal entity, type of the internal entity, software included in the internal entity, hardware included in the internal entity, state of the internal entity, and a condition of the internal entity.

12. The method of any one of the preceding claims, wherein the method is performed based on at least one of:
a state of the vehicle
a context of the vehicle, and
an event.

13. The method of any one of the preceding claims, wherein the method is performed prior to enabling the internal entity to communicate with the external entity.

14. The method of any one of the preceding claims, wherein determining the message was intercepted is based on a flow or sequence of messages.

15. A system adapted to carry out the method of any one of the claims 1-14.
